# EUROPEAN PATENT SPECIFICATION

(11) **EP 2 823 670 B1**
(45) Date of publication and mention of the grant of the patent: **27.04.2016**
(21) Application number: 13711796.6
(22) Date of filing: 07.03.2013
(51) Int. Cl.: H04W 36/22, H04W 36/24, H04W 36/30, H04W 36/32, H04W 84/04

(54) **METHOD AND APPARATUS FOR OFFLOADING DEVICES IN FEMTOCELL COVERAGE**
VERFAHREN UND VORRICHTUNG ZUR ENTLADUNG VON VORRICHTUNGEN IN EINEM FEMTOZELLENABDECKUNGSBEREICH
PROCÉDÉ ET APPAREIL DE DÉCHARGEMENT DE DISPOSITIFS DANS UNE COUVERTURE FEMTOCELLULAIRE

(30) Priority: 08.03.2012 US 201261608559 P; 04.03.2013 US 201313784785
(43) Date of publication of application: 14.01.2015
(73) Proprietor: Qualcomm Incorporated, San Diego, CA 92121 (US)
(72) Inventor: RADULESCU, Andrei Dragos, San Diego, California 92121 (US); MESHKATI, Farhad, San Diego, California 92121 (US); TOKGOZ, Yeliz, San Diego, California 92121 (US); YAVUZ, Mehmet, San Diego, California 92121 (US); TINNAKORNSRISUPHAP, Peerapol, San Diego, California 92121 (US)
(74) Representative: Dunlop, Hugh Christopher
(86) International application number: PCT/US2013/029714
(87) International publication number: WO 2013/134563

(56) References cited:
- EP-A1- 2 373 107
- WO-A1-02/089514
- WO-A1-2005/109910
- WO-A1-2011/018639
- WO-A1-2011/100653
- US-A1- 2002 049 058
- US-A1- 2009 046 665
- US-A1- 2009 323 633
- US-A1- 2010 034 173
- US-A1- 2011 143 758
- US-A1- 2011 319 088
- US-A1- 2012 021 788
- US-B1- 7 050 804
- US-B1- 7 835 749

## Description

### BACKGROUND

The disclosed aspects relate generally to communications between and/or within devices and specifically to methods and systems for device offload from a femto node.

Wireless communication systems are widely deployed to provide various types of communication content such as, for example, voice, data, and so on. Typical wireless communication systems may be multiple-access systems capable of supporting communication with multiple users by sharing available system resources (*e.g.,* bandwidth, transmit power, ...). Examples of such multiple-access systems may include code division multiple access (CDMA) systems, time division multiple access (TDMA) systems, frequency division multiple access (FDMA) systems, orthogonal frequency division multiple access (OFDMA) systems, and the like. Additionally, the systems can conform to specifications such as third generation partnership project (3GPP), 3GPP long term evolution (LTE), ultra mobile broadband (UMB), evolution data optimized (EV-DO), *etc.*

Generally, wireless multiple-access communication systems may simultaneously support communication for multiple mobile devices. Each mobile device may communicate with one or more base stations *via* transmissions on forward and reverse links. The forward link (or downlink) refers to the communication link from base stations to mobile devices, and the reverse link (or uplink) refers to the communication link from mobile devices to base stations. Further, communications between mobile devices and base stations may be established *via* single-input single-output (SISO) systems, multiple-input single-output (MISO) systems, multiple-input multiple-output (MIMO) systems, and so forth. In addition, mobile devices can communicate with other mobile devices (and/or base stations with other base stations) in peer-to-peer wireless network configurations.

To supplement conventional base stations, additional low power base stations can be deployed to provide more robust wireless coverage to mobile devices. For example, low power base stations (*e.g*., which can be commonly referred to as Home NodeBs or Home eNBs, collectively referred to as H(e)NBs, femto nodes, femtocell nodes, pico nodes, micro nodes, *etc.)* can be deployed for incremental capacity growth, richer user experience, in-building or other specific geographic coverage, and/or the like. In some configurations, such low power base stations are connected to the Internet *via* broadband connection *(e.g.,* digital subscriber line (DSL) router, cable or other modem, *etc.),* which can provide the backhaul link to the mobile operator's network. In this regard, low power base stations are often deployed in homes, offices, *etc.* without consideration of a current network environment.

Thus, improved apparatus and methods for determining whether and/or when to offload a device from a femto node may be desired.
US2009/046665 describes a method of handover that has a dependence on both a measure of signal quality such as signal to noise plus interference ratio and on a measure of loading of the base station.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. The invention is defined in the independent claims.

In accordance with one or more aspects and corresponding disclosure thereof, various aspects are described in connection with determining whether to offload a device from a femto node. In one example, a serving node is equipped to obtain load information regarding a target node, compare an expected throughput at the target node, estimated based in part on the load information, to a threshold, and determining whether to handover a device to the target node based in part on the comparing. In an aspect, the serving node is further equipped to compute its own throughput based on parameters specific to the serving femto node or the device, and the threshold is the throughput at the serving femto node.

According to related aspects, a method for determining whether to offload a device from a femto node is provided. The method can include obtaining load information regarding a target node. Further, the method can include comparing an expected throughput at the target node, estimated based in part on the load information, to a threshold. Moreover, the method may include determining whether to handover a device to the target node based in part on the comparing.

Another aspect relates to a communications apparatus enabled to determine whether to offload a device from a femto node. The communications apparatus can include means for means for obtaining load information regarding a target node. Further, the communications apparatus can include means for means for comparing an expected throughput of the target node, estimated based in part on the load information, to a threshold. Moreover, the communications apparatus can include means for means for determining whether to handover a device to the target node based in part on the comparing.

Still another aspect relates to a computer program product, which can have a computer-readable medium including code for obtaining load information regarding a target node. Further, the computer-readable medium may include code for comparing an expected throughput of the target node, estimated based in part on the load information, to a threshold. Moreover, the computer-readable medium can include code for determining whether to handover a device to the target node based in part the on the comparing.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

The disclosed aspects will hereinafter be described in conjunction with the appended drawings, provided to illustrate and not to limit the disclosed aspects, wherein like designations denote like elements, and in which:
Fig. 1 is a block diagram of an example system that facilitates offloading devices to or from a femto node.
Fig. 2 is a block diagram of an example system that facilitates handing over devices based on determining load information for one or more target nodes.
Fig. 3 is an illustration of an example wireless network environment that can be employed in conjunction with the various systems and methods described herein.
Fig. 4 is a flow chart of an aspect of an example methodology for determining whether to handover a device based on load information of a target node.
FIG. 5 is a conceptual data flow diagram illustrating the data flow between different modules/means/components in an exemplary apparatus.
FIG. 6 is a diagram illustrating an example of a hardware implementation for an apparatus employing a processing system
Fig. 7 is a block diagram of an example wireless communication system in accordance with various aspects set forth herein.
Fig. 8 illustrates an example wireless communication system, configured to support a number of devices, in which the aspects herein can be implemented.
Fig. 9 is an illustration of an exemplary communication system to enable deployment of femtocells within a network environment.
Fig. 10 illustrates an example of a coverage map having several defined tracking areas.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

As described further herein, low power base stations, such as femto nodes, can determine load at other base stations for offloading one or more devices thereto. In one example, determining the load can include measuring a downlink quality and comparing the downlink quality to one or more previous downlink quality measurements. For instance, a history of downlink quality for a base station can be determined such that comparing a current downlink quality to the history can indicate a load (or conversely a capacity) at the base station. In this regard, a potential throughput can additionally or alternatively be estimated based on the downlink quality comparison. The low power base station can compare the estimated load or throughput measurement to its own load, throughput, *etc.,* and can accordingly determine whether to handover a device served by the lower power base station to the other base station. This can be based on other considerations as well. Such considerations can include handover considerations, such as whether the device reports signal quality for the other base station that at least achieves a threshold quality and/or a threshold difference to a quality reported for the low power base station. The considerations can additionally or alternatively include other information, such as a type of the other base station, an operating frequency thereof, a location of the device, an amount of resources of the lower power base station consumed by the device, and/or the like.

A low power base station, as referenced herein, can include a femto node, a pico node, micro node, home Node B or home evolved Node B (H(e)NB), relay, and/or other low power base stations, and can be referred to herein using one of these terms, though use of these terms is intended to generally encompass low power base stations. For example, a low power base station transmits at a relatively low power as compared to a macro base station associated with a wireless wide area network (WWAN). As such, the coverage area of the low power base station can be substantially smaller than the coverage area of a macro base station.

As used in this application, the terms "component," "module," "system" and the like are intended to include a computer-related entity, such as but not limited to hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component may be localized on one computer and/or distributed between two or more computers. In addition, these components can execute from various computer readable media having various data structures stored thereon. The components may communicate by way of local and/or remote processes such as in accordance with a signal having one or more data packets, such as data from one component interacting with another component in a local system, distributed system, and/or across a network such as the Internet with other systems by way of the signal.

Furthermore, various aspects are described herein in connection with a terminal, which can be a wired terminal or a wireless terminal. A terminal can also be called a system, device, subscriber unit, subscriber station, mobile station, mobile, mobile device, remote station, remote terminal, access terminal, user terminal, terminal, communication device, user agent, user device, or user equipment (UE). A wireless terminal or device may be a cellular telephone, a satellite phone, a cordless telephone, a Session Initiation Protocol (SIP) phone, a wireless local loop (WLL) station, a personal digital assistant (PDA), a handheld device having wireless connection capability, a tablet, a computing device, or other processing devices connected to a wireless modem. Moreover, various aspects are described herein in connection with a base station. A base station may be utilized for communicating with wireless terminal(s) and may also be referred to as an access point, a Node B, evolved Node B (eNB), home Node B (HNB) or home evolved Node B (HeNB), collectively referred to as H(e)NB, or some other terminology.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

The techniques described herein may be used for various wireless communication systems such as CDMA, TDMA, FDMA, OFDMA, SC-FDMA, WiFi carrier sense multiple access (CSMA), and other systems. The terms "system" and "network" are often used interchangeably. A CDMA system may implement a radio technology such as Universal Terrestrial Radio Access (UTRA), cdma2000, *etc.* UTRA includes Wideband-CDMA (W-CDMA) and other variants of CDMA. Further, cdma2000 covers IS-2000, IS-95 and IS-856 standards. A TDMA system may implement a radio technology such as Global System for Mobile Communications (GSM). An OFDMA system may implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM®, *etc.* UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink. UTRA, E-UTRA, UMTS, LTE and GSM are described in documents from an organization named "3rd Generation Partnership Project" (3GPP). Additionally, cdma2000 and UMB are described in documents from an organization named "3rd Generation Partnership Project 2" (3GPP2). Further, such wireless communication systems may additionally include peer-to-peer (*e.g.*, mobile-to-mobile) *ad hoc* network systems often using unpaired unlicensed spectrums, 802.xx wireless LAN, BLUETOOTH and any other short- or long- range, wireless communication techniques.

Various aspects or features will be presented in terms of systems that may include a number of devices, components, modules, and the like. It is to be understood and appreciated that the various systems may include additional devices, components, modules, *etc.* and/or may not include all of the devices, components, modules *etc.* discussed in connection with the figures. A combination of these approaches may also be used.

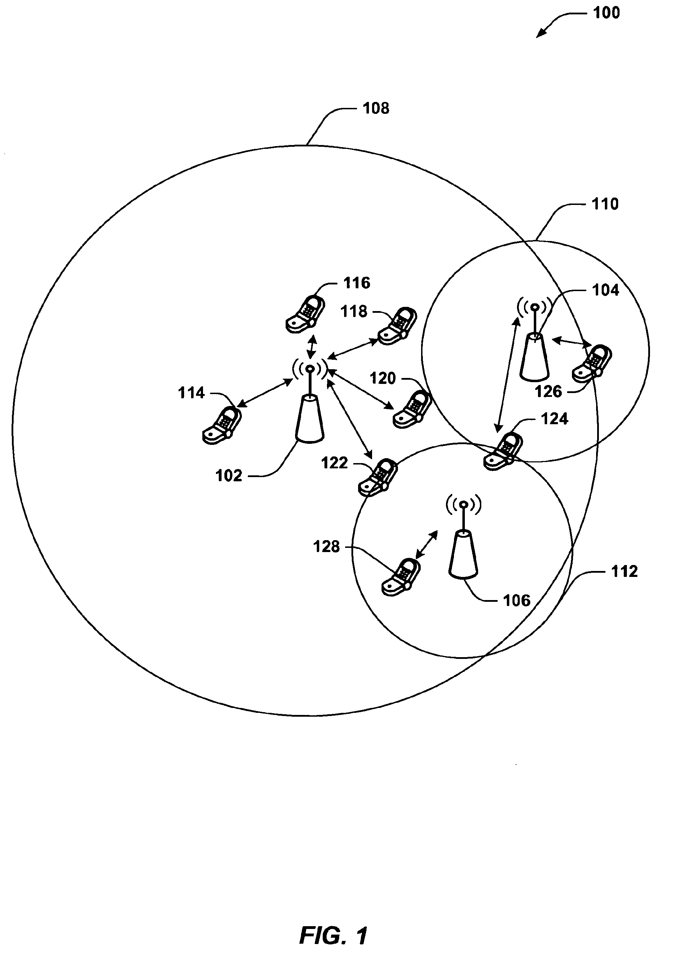

Referring to **Fig. 1****,** an example wireless communication system 100 is illustrated that facilitates offloading devices to/from one or more nodes. System 100 comprises a macro node 102, which can be a macro base station or a femto, pico, or other low power base station node, in one example. System 100 also includes femto nodes 104 and 106, which can be substantially any type of low power base station or at least a portion thereof. The nodes 102, 104, and 106 provide respective coverage areas 108, 110, and 112. System 100 also includes a plurality of devices 114, 116, 118, 120, 122, 124, 126, and 128 that communicate with the nodes 102, 104, or 106 to receive wireless network access.

As described, the femto nodes 104 and 106 can communicate with the wireless network (not shown) over a broadband connection. In addition, femto nodes 104 and 106 can communicate with one another, and/or with macro node 102, over a backhaul connection. For example, upon initialization, one or more of the femto nodes 104 and/or 106 can also communicate with one another to form a grouping (*e.g.,* an ad-hoc network). This allows the femto nodes 104 and/or 106 to communicate to determine parameters related to serving the various devices connected thereto (*e.g.,* resource allocations, interference management, and/or the like), in one example. Moreover, femto nodes 104 and 106 can automatically configure themselves to operate in the wireless network (*e.g.,* set transmit power, network identifiers, pilot signal resources, and/or the like based on similar information received over a backhaul connection, over-the-air, or otherwise sensed from surrounding nodes). In this example, the femto nodes 104 and 106 can behave as plug-and-play devices requiring little user interaction to be provisioned on the wireless network.

In an example, femto node 104 can operate in an open or hybrid access mode to offload device 124 from macro node 102, though device 124 may not be a member of a CSG associated with femto node 104, since device 124 is in range of femto node 104. In some examples, however, though device 124 may be nearer to femto node 104, femto node 104 may not be the best candidate for serving device 124. For example, macro node 102 and/or femto node 106 may have more desirable characteristics. In one example, femto node 104 may have a greater downlink and/or uplink load than macro node 102 and/or femto node 106, and thus handover to another node may result in better performance or improved experience for device 124.

For example, femto node 104 can determine the downlink and/or uplink load of other nodes, and can determine an expected throughput based on the load and/or on the location of femto node 104 (*e.g.,* or at least a device connected to femto node 104 from which measurement reports are received. In one example, the location can be determined as a function of pathloss with respect to the cell (*e.g.,* macro node 102 or femto node 106) for which the expected throughput is being evaluated. Femto node 104 can compare the expected throughput with a threshold throughput to determine whether to handover device 124 to one of the other nodes. In one example, the threshold throughput can be a throughput at femto node 104 *(e.g.,* a throughput measured by femto node 104, a specific throughput reported by or otherwise determined for device 124, an average throughput of one or more devices, *etc*.). In a further example, the threshold can be a function of the femto node 104 or device 124 location with respect to the cell *(e.g.,* macro node 102 or femto node 106) for which the threshold throughput is evaluated, where location can correspond to pathloss with respect to the cell.

In one specific example, femto node 104 can determine downlink quality of another node, such as macro node 102, femto node 106, and/or the like, and compare the downlink quality to one or more historical downlink quality measurements to determine whether the node is at an acceptable downlink load. For example, femto node 104 can measure the downlink quality using a network listening module (NLM), based on reports from one or more devices, and/or the like. The femto node 104 can use the measurements to estimate a downlink load *(e.g.,* high quality indicates low load and *vice versa*). In this example, femto node 104 can accumulate measurements over a period of time to determine historical downlink quality values, such as an average downlink quality, a maximum downlink quality *(e.g.,* minimum load), a minimum downlink quality *(e.g.,* maximum load), and/or the like. A given downlink quality measurement can be compared to the historical downlink quality values to determine a downlink load, and/or an acceptability thereof. The femto node 104 may further determine whether to use or how to use the historical downlink quality values *(e.g.,* by applying an offset dependent on pathloss to macro node 102, femto node 106, and/or the like).

For example, where a downlink quality measured of femto node 106 is within a threshold difference of the minimum downlink quality, this can indicate the femto node 106 is experiencing downlink load near a maximum load, and thus, femto node 104 may not handover device 124 to femto node 106 even as the device 124 moves closer to femto node 106. Femto node 104 may instead determine to continue serving device 124 and/or handover device 124 to macro node 102 or another femto node. In one example, femto node 104 infers an expected throughput at femto node 106 based on the estimated downlink load, and determines the throughput experienced by device 124 at femto node 104 (or an expected throughput at another node) is better than the expected throughput at femto node 106.

Similarly, where a downlink quality measured of femto node 106 is near an average downlink quality or within a threshold difference of the maximum downlink quality, this can indicate the femto node 106 is experiencing a low to average load, and femto node 104 can handover device 124 to femto node 106. This can be based on other factors as well, such as determining an expected throughput at femto node 106 based on the load and comparing to a throughput at femto node 104. In addition, in determining whether to handover device 124, femto node 104 can analyze other considerations as well, as described, such as a signal quality of femto node 106 reported by device 124 in a measurement report, a location of device 124 relative to femto node 106 (and/or femto node 104), a number of resources utilized by the device 124 at femto node 104, and/or the like. It is to be appreciated that an uplink load at the other nodes can be additionally or alternatively measured *(e.g.,* based on an uplink signal strength experienced at the other nodes, which can be determined from an indication received in overhead messages or backhaul communications from the other nodes). In any case, by considering at least a load at a potential target femto node, user experience at devices can be improved as handover to nodes that are substantially loaded can be avoided.

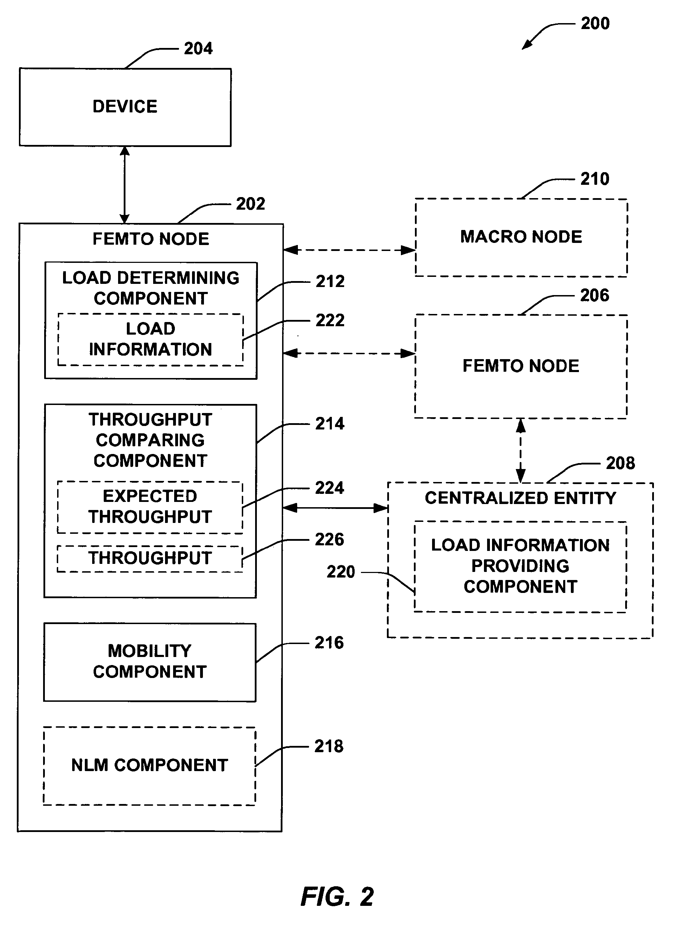

**Fig. 2** illustrates an example system 200 for offloading devices to/from femto nodes in a wireless network. System 200 comprises a femto node 202 that provides wireless network access to a device 204, as described, as well as a femto node 206 that is near femto node 202. Femto nodes 202 and 206 can participate in an ad-hoc network, as described, to manage access provided to one or more devices, such as device 204. Thus, for example, femto node 202 can be similar to one of femto nodes 104 or 106, and femto node 206 can be similar to another one of femto nodes 104 or 106. In this example, femto nodes 202 and 206 can communicate over a backhaul. System 200 also includes an optional centralized entity 208 that can communicate with femto nodes 202 and 206 to provide information thereto. The centralized entity 208 can be a H(e)NB gateway, a H(e)NB management server, and/or the like. As described, device 204 can be similar to one of devices 114, 116, 118, 120, 122, 124, 126, and/or 128, and can be a UE, modem (or other tethered device), a portion thereof, *etc.* Moreover, an optional macro node 210 is provided from which device 204 can be handed over to femto node 202 and/or to which femto node 202 can handover device 204. Macro node 210 can be similar to macro node 102, in one example.

Femto node 202 can include a load determining component 212 for determining a load at one or more other nodes, a throughput comparing component 214 for comparing an expected throughput of the load to a throughput at femto node 202, and a mobility component 216 for determining whether to modify one or more communication parameters of femto node 202, which may cause handover of a device, based at least on the throughput comparison. Femto node 202 also optionally includes an NLM component 218 for receiving and measuring signals from the other nodes.

Centralized entity 208 can include a load information providing component 220 for determining and/or communicating load information of one or more nodes to one or more femto nodes for determining whether to offload devices.

According to an example, load determining component 212 can determine load information 222 for one or more nodes for deciding whether to handover device 204 to the one or more nodes. For example, load determining component 212 can determine load information 222 for femto node 206 and/or macro node 210. In one example, femto node 202 can utilize NLM component 218 to measure parameters from the femto node 206 and/or macro node 210. The parameters can include measuring a downlink quality, such as chip-level energy over interference (Ec/Io) on a pilot channel (*e.g*., common pilot channel (CPICH)), from which a downlink load can be estimated as load information 222. It is to be appreciated, in an example, that load determining component 212 can receive such information from device 204 *(e.g.,* in a measurement report). In another example, load determining component 212 can determine load information 222 to include an uplink load at femto node 206 and/or macro node 210. The uplink load can be based on an uplink RSSI, which can be based on an uplink interference information element (IE) in an overhead system information block received from the femto node 206 and/or macro node 210. For example, a higher UL interference level can correspond to higher uplink load.

In one example, load determining component 212 can estimate the downlink load from the downlink quality, for example, by comparing the downlink quality to a history of downlink quality values. For example, load determining component 212 can consider historical quality values, such as an average downlink quality, a maximum downlink quality, a minimum downlink quality, *etc.* determined over a period of time. Load determining component 212 can compare a current downlink quality measurement to the historical quality values to determine a downlink load as load information 222 at a given node. For instance, the downlink load can be a value expressed as compared to the maximum and/or minimum downlink quality *(e.g.,* a difference relative of the measured downlink quality to the maximum and/or the minimum downlink quality, a percentage related to the measured downlink quality relative to a scaling of the maximum and minimum downlink quality, and/or the like). Moreover, the historical downlink quality values used for comparison can be modified based on time of day, day of week, whether the day is a holiday, *etc.* For example, the typical load may be substantially different at certain times of the day, days of the week, *etc.*

In other examples, load determining component 212 can determine load information as reported by femto node 206 and/or macro node 210. For example, such reporting can occur in layer 2 or layer 3 information *(e.g.,* in one or more system information blocks over a broadcast channel) from the nodes, or other higher layer information (*e.g.*, over a network interface between nodes). Similarly, this information can be received by NLM component 218 and/or reported by one or more devices, such as device 204. In yet another example, load determining component 212 can observe mobility operations to/from femto node 206 and/or macro node 210, and can use this information (*e.g*., along with downlink quality or otherwise) to determine load information 222. For example, load determining component 212 can keep track of handover to/from the femto node 206 and/or macro node 210 as a computed estimate of a number of devices served by the nodes, and can estimate the load, as load information 222, based on the number of devices handed over thereto (and/or therefrom).

In addition, load information providing component 220 can collect load information from femto nodes 202 and 206, and/or macro node 210, and provide the load information to various nodes. In this example, femto node 202 can receive load information 222 from centralized entity 208. For example, load information providing component 220 can obtain the load information for distributing to femto nodes as described with respect to load determining component 212, and/or can receive the load information from load determining component 212 present in femto node 202 and/or other nodes. Furthermore, for example, load determining component 212 can additionally or alternatively acquire load information 222, or quality values or other metrics from which load information 222 is computed, from other femto nodes, such as femto node 206.

In one example, throughput comparing component 214 can determine an expected throughput 224 of a node, such as femto node 206, based on the downlink and/or uplink load information 222. For instance, the expected throughput 224 can be a function of the load information 222, such as a relationship between a downlink quality and the historical downlink quality values. Throughput comparing component 214 can optionally determine a throughput 226 related to femto node 202, or one or more related measurements, such as downlink quality, for comparing to expected throughput 224 or related values. In one example, throughput comparing component 214 can determine the throughput 226 based on femto node 202 specific parameters, such as a number of available channel elements, a rise over thermal, memory utilization, transmit power, a channel quality, *etc.,* or parameters specific to one or more devices communicating with femto node 202 *(e.g.,* device 204), such as a channel quality or throughput as reported by the device, a transmit power of the device, and/or the like.

In any case, throughput comparing component 214 can compare the expected throughput 224 of a node, such as femto node 206, to a threshold, which can be the throughput 226 at femto node 202 or a fixed threshold, to determine whether femto node 206 should serve a device communicating with femto node 202, such as device 204. Mobility component 216 can take this comparison into account in determining whether to cause handover of the device 204 to femto node 206. For example, mobility component 216 can consider other parameters as well, such as a signal strength or quality of femto node 206 as reported by device 204 *(e.g.,* as compared to a similar reported metric of femto node 202 or otherwise). Moreover, for example, mobility component 216 can consider a number of resources of femto node 202 utilized by the device 204, a location of the device 204 with respect to femto node 202, whether the device 204 is ping-ponging between two nodes *(e.g.,* handing over more than a threshold number of times within a time period), and/or the like in determining whether to handover device 204 to the femto node 206.

In this regard, mobility component 216 can determine whether to handover device 204 to femto node 206 based on the above aspects. In other examples, however, mobility component 216 can determine to additionally or alternatively modify communication parameters of femto node 202 that may cause handover of device 204 and/or other devices. For example, the communication parameters can include a transmission power of femto node 202, an operating frequency of femto node 202, other mobility parameters, downlink beacon transmission parameters, a communication state of one or more devices (*e.g*., such as transitioning devices to a lower or higher grant state), and/or the like. For example, where femto node 202 determines that femto node 206 has a higher expected throughput 224, mobility component 216 can adjust the foregoing parameters so devices prefer communication with femto node 206 over femto node 202.

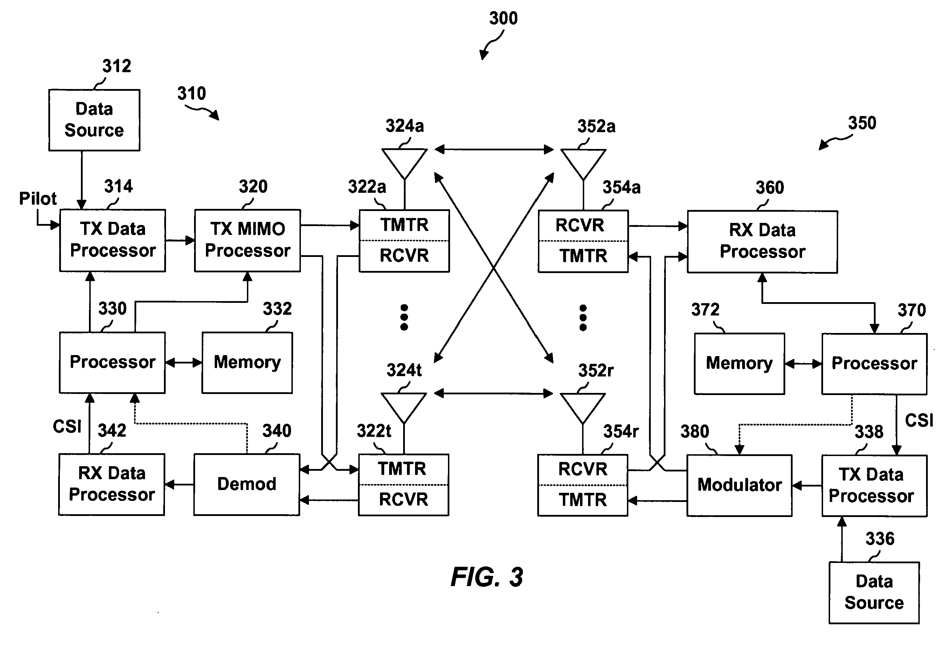

Referring to **Fig. 3****,** an example methodology relating to offloading devices from a femto node is illustrated. While, for purposes of simplicity of explanation, methodologies are shown and described as a series of acts, it is to be understood and appreciated that the methodologies are not limited by the order of acts, as some acts may, in accordance with one or more embodiments, occur in different orders and/or concurrently with other acts from that shown and described herein. For example, it is to be appreciated that a methodology could alternatively be represented as a series of interrelated states or events, such as in a state diagram. Moreover, not all illustrated acts may be required to implement a methodology in accordance with one or more embodiments.

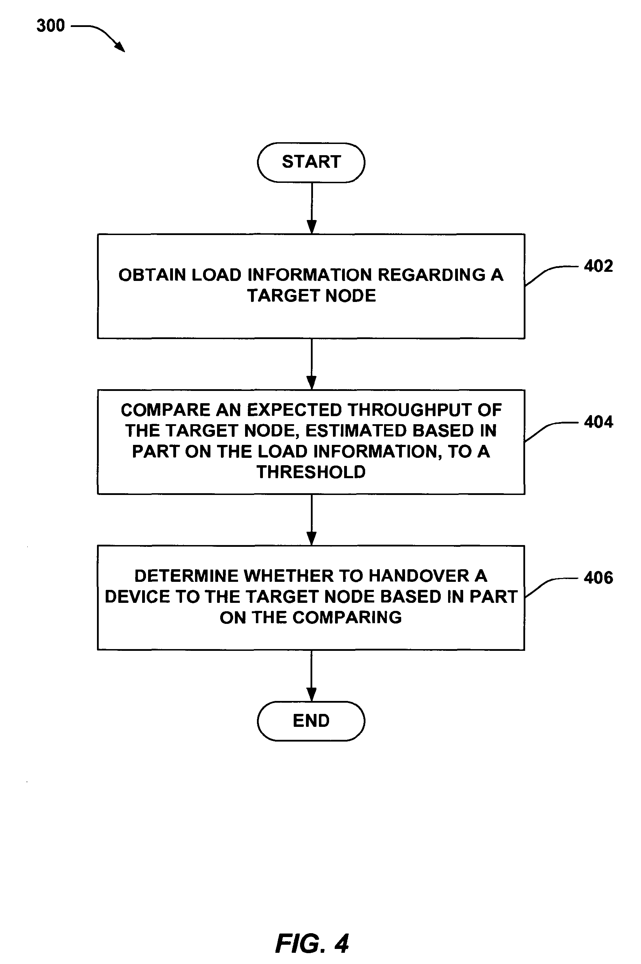

**Fig. 3** shows an example wireless communication system 300. The wireless communication system 300 depicts one base station 310, which can include a femto node, and one mobile device 350 for sake of brevity. However, it is to be appreciated that system 300 can include more than one base station and/or more than one mobile device, wherein additional base stations and/or mobile devices can be substantially similar or different from example base station 310 and mobile device 350 described below. In addition, it is to be appreciated that base station 310 and/or mobile device 350 can employ the systems **(****Figs. 1****,** **2****,** **5****, and** **7****)** and/or methods **(****Fig. 4****)** described herein to facilitate wireless communication there between. For example, components or functions of the systems and/or methods described herein can be part of a memory 332 and/or 372 or processors 330 and/or 370 described below, and/or can be executed by processors 330 and/or 370 to perform the disclosed functions.

At base station 310, traffic data for a number of data streams is provided from a data source 312 to a transmit (TX) data processor 314. According to an example, each data stream can be transmitted over a respective antenna. TX data processor 314 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at mobile device 350 to estimate channel response. The multiplexed pilot and coded data for each data stream can be modulated (*e.g.*, symbol mapped) based on a particular modulation scheme (*e.g*., binary phase-shift keying (BPSK), quadrature phase-shift keying (QPSK), M-phase-shift keying (M-PSK), M-quadrature amplitude modulation (M-QAM), *etc.)* selected for that data stream to provide modulation symbols. The data rate, coding, and modulation for each data stream can be determined by instructions performed or provided by processor 330.

The modulation symbols for the data streams can be provided to a TX MIMO processor 320, which can further process the modulation symbols *(e.g.,* for OFDM). TX MIMO processor 320 then provides *N_{T}* modulation symbol streams to *N_{T}* transmitters (TMTR) 322a through 322t. In various embodiments, TX MIMO processor 320 applies beamforming weights to the symbols of the data streams and to the antenna from which the symbol is being transmitted.

Each transmitter 322 receives and processes a respective symbol stream to provide one or more analog signals, and further conditions *(e.g.,* amplifies, filters, and upconverts) the analog signals to provide a modulated signal suitable for transmission over the MIMO channel. Further, *N_{T}* modulated signals from transmitters 322a through 322t are transmitted from *N_{T}* antennas 324a through 324t, respectively.

At mobile device 350, the transmitted modulated signals are received by *N_{R}* antennas 352a through 352r and the received signal from each antenna 352 is provided to a respective receiver (RCVR) 354a through 354r. Each receiver 354 conditions *(e.g.,* filters, amplifies, and downconverts) a respective signal, digitizes the conditioned signal to provide samples, and further processes the samples to provide a corresponding "received" symbol stream.

An RX data processor 360 can receive and process the *N_{R}* received symbol streams from *N_{R}* receivers 354 based on a particular receiver processing technique to provide *N_{T}* "detected" symbol streams. RX data processor 360 can demodulate, deinterleave, and decode each detected symbol stream to recover the traffic data for the data stream. The processing by RX data processor 360 is complementary to that performed by TX MIMO processor 320 and TX data processor 314 at base station 310.

The reverse link message can comprise various types of information regarding the communication link and/or the received data stream. The reverse link message can be processed by a TX data processor 338, which also receives traffic data for a number of data streams from a data source 336, modulated by a modulator 380, conditioned by transmitters 354a through 354r, and transmitted back to base station 310.

At base station 310, the modulated signals from mobile device 350 are received by antennas 324, conditioned by receivers 322, demodulated by a demodulator 340, and processed by a RX data processor 342 to extract the reverse link message transmitted by mobile device 350. Further, processor 330 can process the extracted message to determine which precoding matrix to use for determining the beamforming weights.

Processors 330 and 370 can direct (*e.g.,* control, coordinate, manage, *etc*.) operation at base station 310 and mobile device 350, respectively. Respective processors 330 and 370 can be associated with memory 332 and 372 that store program codes and data. Processors 330 and 370 can also perform functionalities described herein to support offloading devices from a femto node.

Turning to **Fig. 4****,** an example methodology 400 is displayed that facilitates determining whether to cause devices to handover from a femto node.

At 402, load information regarding a target node can be obtained. For example, this can include measuring a downlink quality of the target node and comparing to historical downlink qualities of the target node, as described, to estimate a load on the node. In other examples, this can include determining the load information based on various factors, such as monitoring a number of reselections or handovers performed to and/or from the target node. In yet another example, this can include receiving the load information, or any of the above information from which the load information can be estimated, from the target node and/or from a centralized entity or other nodes. Moreover, as described, the load information can correspond to uplink load, and can be measured based on one or more uplink parameters *(e.g.,* uplink RSSI at the target node).

At 404, an expected throughput of the target node, estimated based in part on the load information, can be compared to a threshold. As described, the threshold can be a fixed threshold, a throughput at a serving femto node, *etc.* For example, the expected throughput can be estimated in relation to the load information, and can thus include an expected downlink and/or uplink throughput. Where the load information indicates the target node is at a threshold load, the expected throughput can be estimated at a lower value than where the load information indicates the target node load is below the threshold. For example, the relationship between the load and the expected throughput can correspond to a mapping of values based on previous reported throughputs for given loads, and/or the like. In any case, as described, the expected throughput can be compared to a threshold, which can include a fixed threshold or the throughput at the serving femto node computed based on parameters specific to the serving femto node and/or on parameters specific to devices communicating therewith.

At 406, it can be determined whether to handover a device to the target node based in part on the comparing. For example, where the expected downlink or uplink throughput at the target node is better than the throughput measured at the serving femto node, handover can be preferred. In one example, additional parameters can be evaluated for determining whether to handover the device, such as a reported signal quality of the target node, a number of resources utilized by the device, *etc.* Moreover, determining whether to handover at 406 can comprise modifying mobility related parameters instead of or in addition to actually performing handover. For example, parameters can include a transmission power, an operating frequency, downlink beacon parameters, states of one or more devices, and/or the like.

It will be appreciated that, in accordance with one or more aspects described herein, inferences can be made regarding estimating a load at a femto node and/or a respective throughput, and/or the like, as described. As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

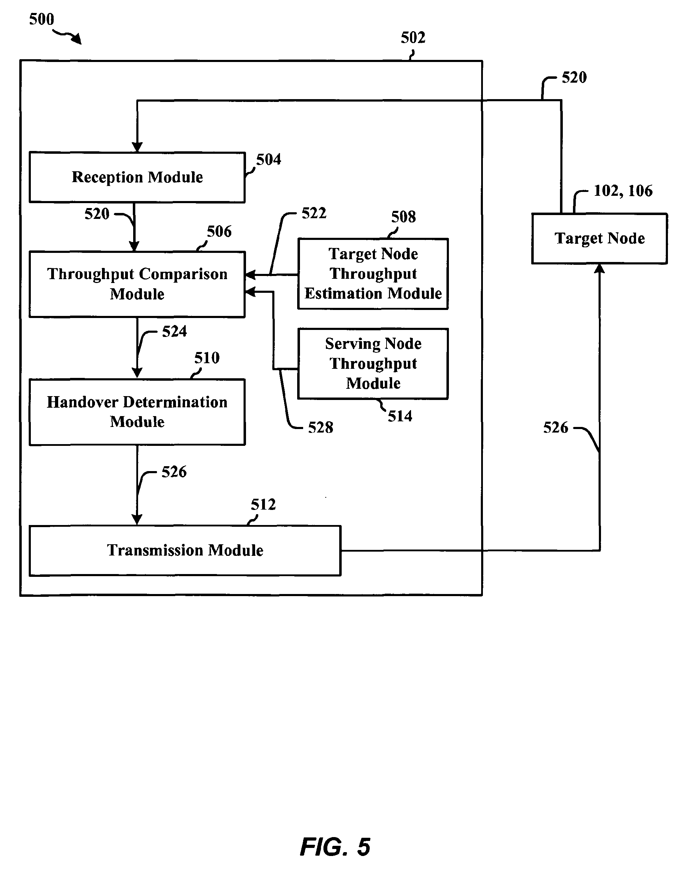

FIG. 5 is a conceptual data flow diagram 500 illustrating the data flow between different modules/means/components in an example apparatus 502. The apparatus may be a serving node. The apparatus includes a reception module 504, a throughput comparison module 506, a target node throughput estimation module 508, a handover determination module 510, a transmission module 512, and a serving node throughput module 514.

In an operational aspect, reception module 504 may obtain load information 520 regarding a target node 102, 106. In an aspect, reception module 504 may obtain a downlink quality at the target node 102, 106. In another aspect, reception module 504 may obtain load information 520 from measuring the downlink quality or the one or more historical downlink quality values of the target node. In such an aspect, the downlink quality and the one or more historical downlink quality values correspond to a chip-level energy over interference measurement of a pilot channel of the target node 102, 106. In another aspect, reception module 504 may obtain load information 520 from receiving the downlink quality or the one or more historical downlink quality values of the target node 102, 106 from one or more devices. In another aspect, reception module 504 may obtain load information 520 by obtaining an uplink received signal strength indicator (RSSI) at the target node 102, 106. In another aspect, reception module 504 may obtain load information 520 by receiving the load information 520 in a system information block from the target node 102, 106. In another aspect, reception module 504 may obtain load information 520 by receiving the load information 520 in part by detecting a number of reselections or handovers performed to or from the target node 102, 106. In still another aspect, reception module 504 may obtain information 520 include a location with respect to the target node 102, 106. In such an aspect, the location information 520 may include a pathloss with respect to the target node 102, 106. Thereafter, reception module 504 may provide the load information 520 to throughput comparison module 506 for processing.

Throughput comparison module 506 may receive an expected throughput value 522 from target node throughput estimation module 508, compare it to a threshold, and generate a comparison value 524. In such an aspect, the expected throughput value 522 may be estimated based in part on the load information 520. In an aspect, serving node throughput module 514 may computer the throughput at a serving femto node 502 based on parameters specific to the serving femto node or parameters specific to the device. In such an aspect, the threshold used for comparison by target node throughput estimation module 508 may be based on the throughput 528 at the serving femto node 502. Target node throughput estimation module 508 may provide the comparison value 524 to handover determination module 510 to determine whether to handover a device to the target node based in part on the comparison value 524. In an aspect, handover determination module 510 may perform the determination through determining whether to modify one or more communication parameters 526 at a serving femto node 502 to cause handover of the device. In an aspect, transmission module 512 may be used to commute the modified communication parameters 526.

The apparatus may include additional modules that perform each of the steps of the algorithm in the aforementioned flow chart of FIG. 4. As such, each block in the aforementioned flow chart of FIG. 4 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

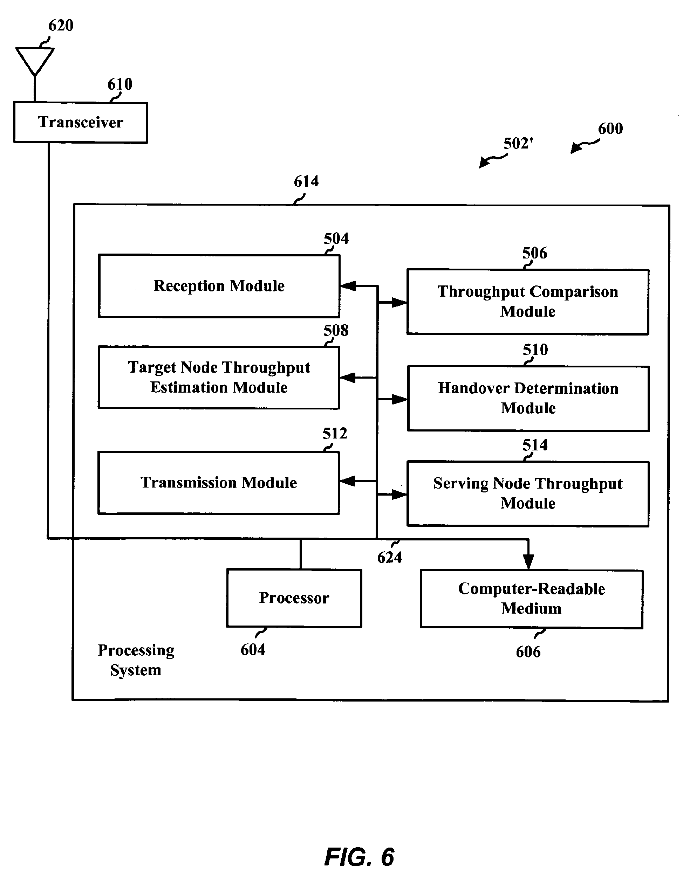

FIG. 6 is a diagram 600 illustrating an example of a hardware implementation for an apparatus 502' employing a processing system 614. The processing system 614 may be implemented with a bus architecture, represented generally by the bus 624. The bus 624 may include any number of interconnecting buses and bridges depending on the specific application of the processing system 614 and the overall design constraints. The bus 624 links together various circuits including one or more processors and/or hardware modules, represented by the processor 604, the modules 504, 506, 508, 510, 512, 514, and the computer-readable medium 606. The bus 624 may also link various other circuits such as timing sources, peripherals, voltage regulators, and power management circuits, which are well known in the art, and therefore, will not be described any further.

The processing system 614 may be coupled to a transceiver 610. The transceiver 610 is coupled to one or more antennas 620. The transceiver 610 provides a means for communicating with various other apparatus over a transmission medium. The processing system 614 includes a processor 604 coupled to a computer-readable medium 606. The processor 604 is responsible for general processing, including the execution of software stored on the computer-readable medium 606. The software, when executed by the processor 604, causes the processing system 614 to perform the various functions described *supra* for any particular apparatus. The computer-readable medium 606 may also be used for storing data that is manipulated by the processor 604 when executing software. The processing system further includes at least one of the modules 504, 506, 508, 510, 512, and 514. The modules may be software modules running in the processor 604, resident/stored in the computer-readable medium 606, one or more hardware modules coupled to the processor 604, or some combination thereof. The processing system 614 may be a component of the eNB 310 and may include the memory 332 and/or at least one of the TX data processor 314, the RX data processor 342, and the controller/processor 320.

In one configuration, the apparatus 502/502' for wireless communication includes means for obtaining load information regarding a target node, means for comparing an expected throughput at the target node, estimated based in part on the load information, to a threshold, and means for determining whether to handover a device to the target node based in part on the comparing. In an aspect, the apparatus 502/502' means for obtaining receives a downlink quality at the target node and determines the load information based in part on the downlink quality. In another aspect, the apparatus 502/502' means for obtaining compares the downlink quality to one or more historical downlink quality values at the target node to determine the load information. In another aspect, the apparatus 502/502' means for obtaining obtains an uplink RSSI at the target node and determines the load information based on the uplink RSSI. In another aspect, the apparatus 502/502' means for obtaining receives the load information in a system information block from the target node. In another aspect, the apparatus 502/502' means for obtaining determines the load information based in part on detecting a number of reselections or handovers performed to or from the target node.

The aforementioned means may be one or more of the aforementioned modules of the apparatus 502 and/or the processing system 614 of the apparatus 502' configured to perform the functions recited by the aforementioned means. As described *supra,* the processing system 614 may include the TX data Processor 314, the RX data Processor 342, and the controller/processor 330. As such, in one configuration, the aforementioned means may be the TX data Processor 314, the RX data Processor 342, and the controller/processor 330 configured to perform the functions recited by the aforementioned means.

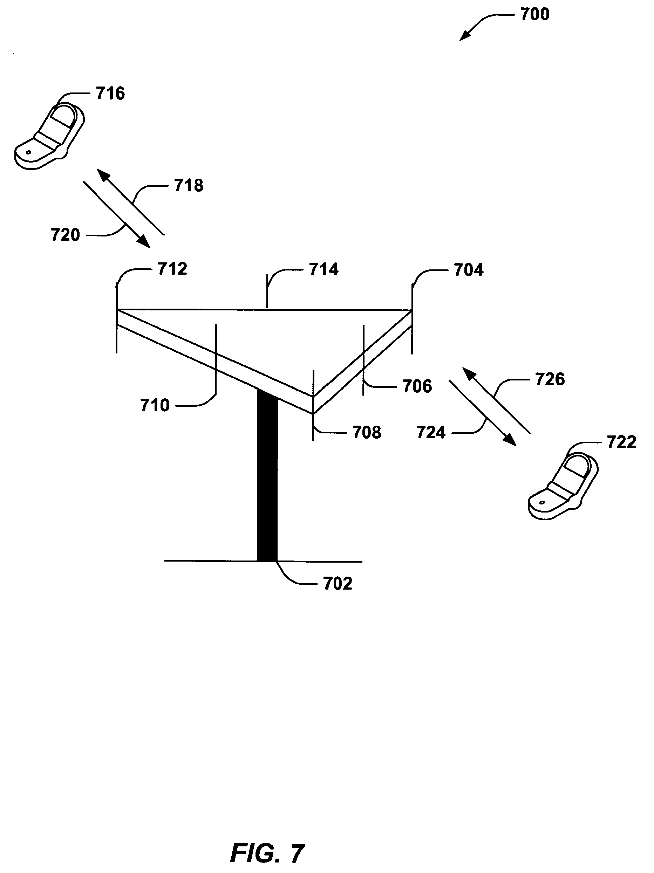

Referring now to **Fig. 7****,** a wireless communication system 700 is illustrated in accordance with various embodiments presented herein. System 700 comprises a base station 702 that can include multiple antenna groups. For example, one antenna group can include antennas 704 and 706, another group can comprise antennas 708 and 710, and an additional group can include antennas 712 and 714. Two antennas are illustrated for each antenna group; however, more or fewer antennas can be utilized for each group. Base station 702 can additionally include a transmitter chain and a receiver chain, each of which can in turn comprise a plurality of components associated with signal transmission and reception (*e.g*., processors, modulators, multiplexers, demodulators, demultiplexers, antennas, *etc*.), as is appreciated.

Base station 702 can communicate with one or more mobile devices such as mobile device 716 and mobile device 722; however, it is to be appreciated that base station 702 can communicate with substantially any number of mobile devices similar to mobile devices 716 and 722. Mobile devices 716 and 722 can be, for example, cellular phones, smart phones, laptops, handheld communication devices, handheld computing devices, satellite radios, global positioning systems, PDAs, and/or any other suitable device for communicating over wireless communication system 700. As depicted, mobile device 716 is in communication with antennas 712 and 714, where antennas 712 and 714 transmit information to mobile device 716 over a forward link 718 and receive information from mobile device 716 over a reverse link 720. Moreover, mobile device 722 is in communication with antennas 704 and 706, where antennas 704 and 706 transmit information to mobile device 722 over a forward link 724 and receive information from mobile device 722 over a reverse link 726. In a frequency division duplex (FDD) system, forward link 718 can utilize a different frequency band than that used by reverse link 720, and forward link 724 can employ a different frequency band than that employed by reverse link 726, for example. Further, in a time division duplex (TDD) system, forward link 718 and reverse link 720 can utilize a common frequency band and forward link 724 and reverse link 726 can utilize a common frequency band.

Each group of antennas and/or the area in which they are designated to communicate can be referred to as a sector of base station 702. For example, antenna groups can be designed to communicate to mobile devices in a sector of the areas covered by base station 702. In communication over forward links 718 and 724, the transmitting antennas of base station 702 can utilize beamforming to improve signal-to-noise ratio of forward links 718 and 724 for mobile devices 716 and 722. Also, while base station 702 utilizes beamforming to transmit to mobile devices 716 and 722 scattered randomly through an associated coverage, mobile devices in neighboring cells can be subject to less interference as compared to a base station transmitting through a single antenna to all its mobile devices. Moreover, mobile devices 716 and 722 can communicate directly with one another using a peer-to-peer or ad hoc technology as depicted. According to an example, system 700 can be a multiple-input multiple-output (MIMO) communication system.

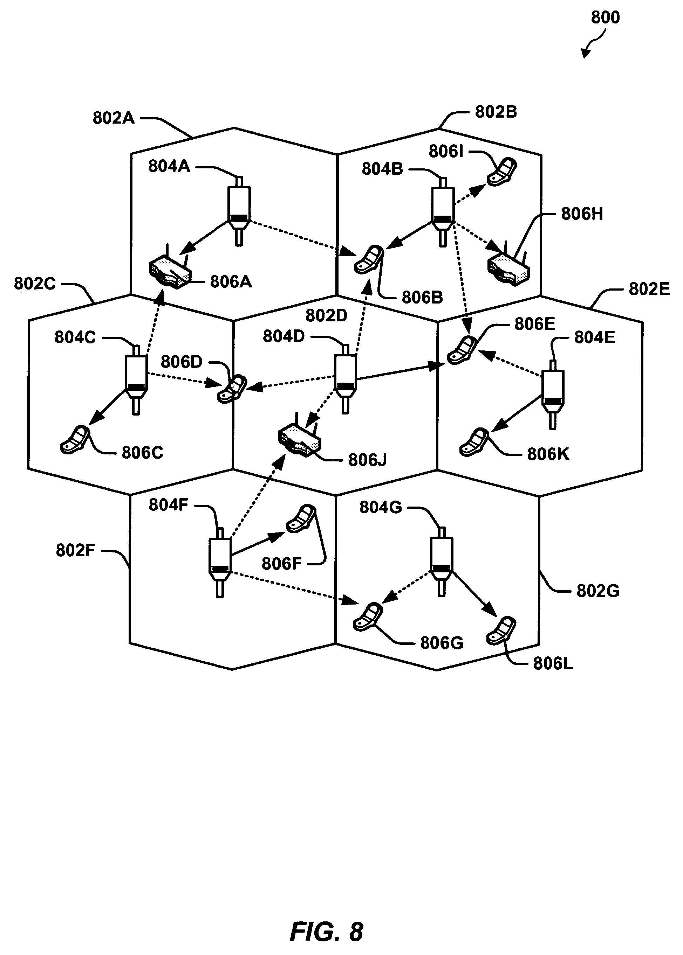

**Fig. 8** illustrates a wireless communication system 800, configured to support a number of users, in which the teachings herein may be implemented. The system 800 provides communication for multiple cells 802, such as, for example, macro cells 802A - 802G, with each cell being serviced by a corresponding access node 804 *(e.g.,* access nodes 804A - 804G). As shown in **Fig. 8****,** access terminals 806 *(e.g.,* access terminals 806A - 806L) can be dispersed at various locations throughout the system over time. Each access terminal 806 can communicate with one or more access nodes 804 on a forward link (FL) and/or a reverse link (RL) at a given moment, depending upon whether the access terminal 806 is active and whether it is in soft handoff, for example. The wireless communication system 800 can provide service over a large geographic region.

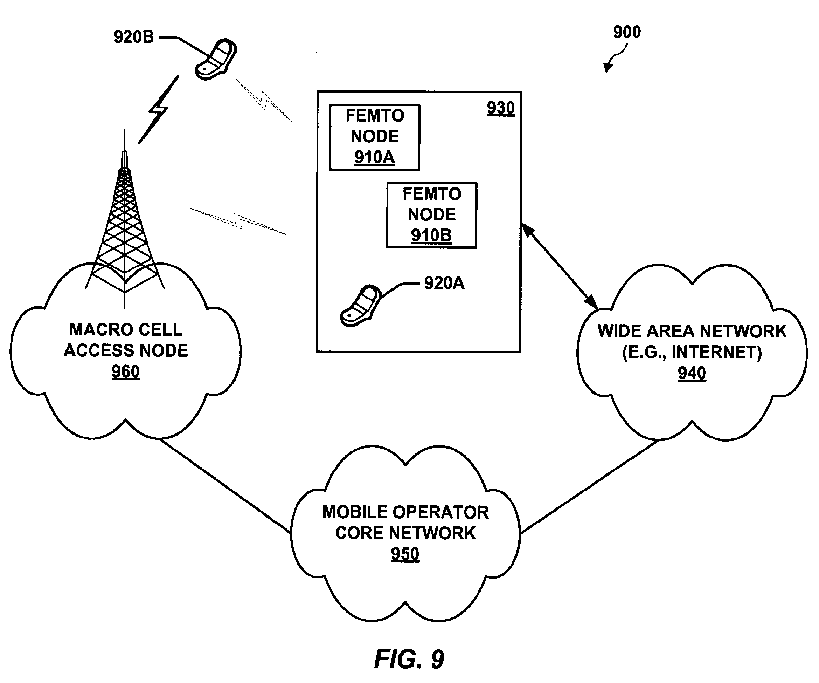

**Fig. 9** illustrates an example communication system 900 where one or more femto nodes are deployed within a network environment. Specifically, the system 900 includes multiple femto nodes 910A and 910B (*e.g*., femtocell nodes or H(e)NB) installed in a relatively small scale network environment (*e.g*., in one or more user residences 930). Each femto node 910 can be coupled to a wide area network 940 (*e.g.,* the Internet) and a mobile operator core network 950 *via* a digital subscriber line (DSL) router, a cable modem, a wireless link, or other connectivity means (not shown). As will be discussed below, each femto node 910 can be configured to serve associated access terminals 920 (*e.g.,* access terminal 920A) and, optionally, alien access terminals 920 (*e.g.,* access terminal 920B). In other words, access to femto nodes 910 can be restricted such that a given access terminal 920 can be served by a set of designated (*e.g.,* home) femto node(s) 910 but may not be served by any non-designated femto nodes 910 (*e.g.,* a neighbor's femto node).

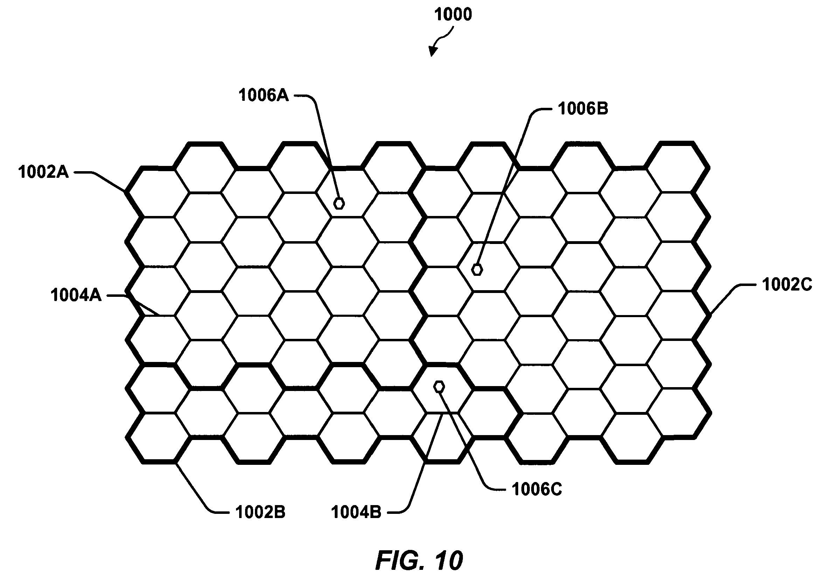

**Fig. 10** illustrates an example of a coverage map 1000 where several tracking areas 1002 (or routing areas or location areas) are defined, each of which includes several macro coverage areas 1004. Here, areas of coverage associated with tracking areas 1002A, 1002B, and 1002C are delineated by the wide lines and the macro coverage areas 1004 are represented by the hexagons. The tracking areas 1002 also include femto coverage areas 1006. In this example, each of the femto coverage areas 1006 *(e.g.,* femto coverage area 1006C) is depicted within a macro coverage area 1004 *(e.g.,* macro coverage area 1004B). It should be appreciated, however, that a femto coverage area 1006 may not lie entirely within a macro coverage area 1004. In practice, a large number of femto coverage areas 1006 can be defined with a given tracking area 1002 or macro coverage area 1004. Also, one or more pico coverage areas (not shown) can be defined within a given tracking area 1002 or macro coverage area 1004.

Referring again to **Fig. 9****,** the owner of a femto node 910 can subscribe to mobile service, such as, for example, 3G mobile service, offered through the mobile operator core network 950. In another example, the femto node 910 can be operated by the mobile operator core network 950 to expand coverage of the wireless network. In addition, an access terminal 920 can be capable of operating both in macro environments and in smaller scale (*e.g*., residential) network environments. Thus, for example, depending on the current location of the access terminal 920, the access terminal 920 can be served by a macro cell access node 960 or by any one of a set of femto nodes 910 *(e.g.,* the femto nodes 910A and 910B that reside within a corresponding user residence 930). For example, when a subscriber is outside his home, he is served by a standard macro cell access node *(e.g.,* node 960) and when the subscriber is at home, he is served by a femto node *(e.g.,* node 910A). Here, it should be appreciated that a femto node 910 can be backward compatible with existing access terminals 920.

A femto node 910 can be deployed on a single frequency or, in the alternative, on multiple frequencies. Depending on the particular configuration, the single frequency or one or more of the multiple frequencies can overlap with one or more frequencies used by a macro cell access node *(e.g.,* node 960). In some aspects, an access terminal 920 can be configured to connect to a preferred femto node *(e.g.,* the home femto node of the access terminal 920) whenever such connectivity is possible. For example, whenever the access terminal 920 is within the user's residence 930, it can communicate with the home femto node 910.

In some aspects, if the access terminal 920 operates within the mobile operator core network 950 but is not residing on its most preferred network *(e.g.,* as defined in a preferred roaming list), the access terminal 920 can continue to search for the most preferred network (*e.g*., femto node 910) using a Better System Reselection (BSR), which can involve a periodic scanning of available systems to determine whether better systems are currently available, and subsequent efforts to associate with such preferred systems. Using an acquisition table entry *(e.g.,* in a preferred roaming list), in one example, the access terminal 920 can limit the search for specific band and channel. For example, the search for the most preferred system can be repeated periodically. Upon discovery of a preferred femto node, such as femto node 910, the access terminal 920 selects the femto node 910 for camping within its coverage area.

A femto node can be restricted in some aspects. For example, a given femto node can only provide certain services to certain access terminals. In deployments with so-called restricted (or closed) association, a given access terminal can only be served by the macro cell mobile network and a defined set of femto nodes *(e.g.,* the femto nodes 910 that reside within the corresponding user residence 930). In some implementations, a femto node can be restricted to not provide, for at least one access terminal, at least one of: signaling, data access, registration, paging, or service.

In some aspects, a restricted femto node (which can also be referred to as a Closed Subscriber Group H(e)NB) is one that provides service to a restricted provisioned set of access terminals. This set can be temporarily or permanently extended as necessary. In some aspects, a Closed Subscriber Group (CSG) can be defined as the set of access nodes (*e.g*., femto nodes) that share a common access control list of access terminals. A channel on which all femto nodes (or all restricted femto nodes) in a region operate can be referred to as a femto channel.

Various relationships can thus exist between a given femto node and a given access terminal. For example, from the perspective of an access terminal, an open femto node can refer to a femto node with no restricted association. A restricted femto node can refer to a femto node that is restricted in some manner (*e.g*., restricted for association and/or registration). A home femto node can refer to a femto node on which the access terminal is authorized to access and operate on. A guest femto node can refer to a femto node on which an access terminal is temporarily authorized to access or operate on. An alien femto node can refer to a femto node on which the access terminal is not authorized to access or operate on, except for perhaps emergency situations (*e.g*., 911 calls).

From a restricted femto node perspective, a home access terminal can refer to an access terminal that authorized to access the restricted femto node. A guest access terminal can refer to an access terminal with temporary access to the restricted femto node. An alien access terminal can refer to an access terminal that does not have permission to access the restricted femto node, except for perhaps emergency situations, for example, 911 calls *(e.g.,* an access terminal that does not have the credentials or permission to register with the restricted femto node).

For convenience, the disclosure herein describes various functionality in the context of a femto node. It should be appreciated, however, that a pico node can provide the same or similar functionality as a femto node, but for a larger coverage area. For example, a pico node can be restricted, a home pico node can be defined for a given access terminal, and so on.

A wireless multiple-access communication system can simultaneously support communication for multiple wireless access terminals. As mentioned above, each terminal can communicate with one or more base stations *via* transmissions on the forward and reverse links. The forward link (or downlink) refers to the communication link from the base stations to the terminals, and the reverse link (or uplink) refers to the communication link from the terminals to the base stations. This communication link can be established *via* a single-in-single-out system, a MIMO system, or some other type of system.

The various illustrative logics, logical blocks, modules, components, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal.

In one or more aspects, the functions, methods, or algorithms described may be implemented in hardware, software, firmware, or any combination thereof. If implemented in software, the functions may be stored or transmitted as one or more instructions or code on a computer-readable medium, which may be incorporated into a computer program product. Computer-readable media includes both computer storage media and communication media including any medium that facilitates transfer of a computer program from one place to another. A storage medium may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, substantially any connection may be termed a computer-readable medium. For example, if software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs usually reproduce data optically with lasers. Combinations of the above should also be included within the scope of computer-readable media.

While the foregoing disclosure discusses illustrative aspects and/or embodiments, it should be noted that various changes and modifications could be made herein without departing from the scope of the described aspects and/or embodiments as defined by the appended claims. Furthermore, although elements of the described aspects and/or embodiments may be described or claimed in the singular, the plural is contemplated unless limitation to the singular is explicitly stated. Additionally, all or a portion of any aspect and/or embodiment may be utilized with all or a portion of any other aspect and/or embodiment, unless stated otherwise.

## Claims

1. A method (300) for determining whether to offload a device from a femto node, comprising:
obtaining a downlink quality at a target node (102, 106);
obtaining (402) load information regarding the target node, wherein obtaining the load information is based in part on comparing the downlink quality to one or more historical downlink quality values at the target node;
comparing (404) an expected throughput at the target node, estimated based in part on the load information, to a threshold; and
determining (406) whether to handover a device to the target node based in part on the comparing.

2. The method of claim 1, further comprising measuring the downlink quality or the one or more historical downlink quality values of the target node using a network listening module.

3. The method of claim 1, further comprising receiving the downlink quality or the one or more historical downlink quality values of the target node from one or more devices.

4. The method of claim 1, wherein the downlink quality and the one or more historical downlink quality values correspond to a chip-level energy over interference measurement of a pilot channel of the target node.

5. The method of claim 1, further comprising obtaining an uplink received signal strength indicator, RSSI, at the target node, wherein the obtaining the load information is based on the uplink RSSI.

6. The method of claim 1, further comprising computing the throughput at a serving femto node based on parameters specific to the serving femto node or parameters specific to the device.

7. The method of claim 6, wherein the threshold is the throughput at the serving femto node.

8. The method of claim 1, wherein the determining whether to handover the device comprises determining whether to modify one or more communication parameters at a serving femto node to cause handover of the device.

9. The method of claim 8, wherein the one or more parameters comprise a transmission power, an operating frequency, a beacon transmission, or a communication state of one or more devices communicating with the serving femto node.

10. The method of claim 1, further comprising obtaining a location with respect to the target node, wherein the expected throughput is further estimated based on the location with respect to the target node.

11. The method of claim 10, wherein the location with respect to the target node includes a pathloss with respect to the target node.

12. An apparatus (600) for determining whether to offload a device from a femto node, comprising:
means arranged to perform the steps of any one of claims 1 to 11

13. A computer program product for determining whether to offload a device from a femto node, comprising:
a computer-readable medium (606), comprising code arranged to perform the steps of any one of claims 1 to 11

## Patentansprüche

1. Ein Verfahren (300) zum Bestimmen, ob ein Gerät von einem Femtoknoten abgekoppelt werden soll, aufweisend:
Erhalten einer Abwärtsstrecken-Qualität an einem Zielknoten (102, 106),
Erhalten (402) von Lastinformationen bezüglich dem Zielknoten, wobei das Erhalten der Lastinformationen teilweise auf dem Vergleichen der Abwärtsstrecken-Qualität mit einem oder mehreren historischen Abwärtsstrecken-Qualitätswerten an dem Zielknoten basiert,
Vergleichen (404) eines erwarteten Durchsatzes an dem Zielknoten, der teilweise basierend auf den Lastinformationen geschätzt wird, mit einem Schwellwert, und
Bestimmen (406), ob ein Handover eines Geräts zu dem Zielknoten durchgeführt werden soll, teilweise basierend auf dem Vergleich.

2. Verfahren nach Anspruch 1, das weiterhin das Messen der Abwärtsstrecken-Qualität oder des einen oder der mehreren historischen Abwärtsstrecken-Qualitätswerte des Zielknotens unter Verwendung eines Netzwerkbeobachtungsmoduls aufweist.

3. Verfahren nach Anspruch 1, das weiterhin das Empfangen der Abwärtsstrecken-Qualität oder des einen oder der mehreren historischen Abwärtsstrecken-Qualitätswerte des Zielknotens von einem oder mehreren Geräten aufweist.

4. Verfahren nach Anspruch 1, wobei die Abwärtsstrecken-Qualität und der eine oder die mehreren historischen Abwärtsstrecken-Qualitätswerte einer Chipebenen-Energie über eine Interferenzmessung eines Pilotkanals des Zielknotens entsprechen.

5. Verfahren nach Anspruch 1, das weiterhin das Erhalten eines Aufwärtsstrecken-Empfangssignal-Stärkeindikators (Aufwärtsstrecken-RSSI) an dem Zielknoten aufweist, wobei das Erhalten der Lastinformationen auf dem Aufwärtsstrecken-RSSI basiert.

6. Verfahren nach Anspruch 1, das weiterhin das Berechnen des Durchsatzes an einem Versorgungs-Femtoknoten basierend auf spezifischen Parametern für den Versorgungs-Femtoknoten oder auf spezifischen Parametern für das Gerät aufweist.

7. Verfahren nach Anspruch 6, wobei der Schwellwert der Durchsatz an dem Versorgungs-Femtoknoten ist.

8. Verfahren nach Anspruch 1, wobei das Bestimmen, ob ein Handover eines Geräts durchgeführt werden soll, das Bestimmen, ob ein oder mehrere Kommunikationsparameter an einem Versorgungs-Femtoknoten modifiziert werden sollen, um einen Handover des Geräts zu veranlassen, aufweist.

9. Verfahren nach Anspruch 8, wobei der eine oder die mehreren Parameter eine Sendeleistung, eine Betriebsfrequenz, eine Beacon-Sendung oder einen Kommunikationszustand eines oder mehrerer mit dem Versorgungs-Femtoknoten kommunizierender Geräte aufweisen.

10. Verfahren nach Anspruch 1, das weiterhin das Erhalten einer Position in Bezug auf den Zielknoten aufweist, wobei der erwartete Durchsatz weiterhin basierend auf der Position in Bezug auf den Zielknoten geschätzt wird.

11. Verfahren nach Anspruch 10, wobei die Position in Bezug auf den Zielknoten einen Pfadverlust in Bezug auf den Zielknoten enthält.

12. Eine Vorrichtung (600) zum Bestimmen, ob ein Gerät von einem Femtoknoten abgekoppelt werden soll, aufweisend:
Mittel, die angeordnet sind, um die Schritte nach einem der Ansprüche 1 bis 11 durchzuführen.

13. Ein Computerprogrammprodukt zum Bestimmen, ob ein Gerät von einem Femtoknoten abgekoppelt werden soll, aufweisend:
ein computerlesbares Medium (606), das einen Code aufweist, der angeordnet ist, um die Schritte nach einem der Ansprüche 1 bis 11 durchzuführen.

## Revendications

1. Un procédé (300) de détermination s'il convient de délester un dispositif d'un noeud femto, comprenant :
l'obtention d'une qualité en liaison descendante au niveau d'un noeud cible (102, 106),
l'obtention (402) d'informations de charge concernant le noeud cible, où l'obtention des informations de charge est en partie basée sur la comparaison de la qualité en liaison descendante à une ou plusieurs valeurs d'historique de qualité en liaison descendante au niveau du noeud cible,
la comparaison (404) d'un débit attendu au niveau du noeud cible, estimé en fonction en partie des informations de charge, à un seuil, et
la détermination (406) s'il convient de transférer un dispositif vers le noeud cible en fonction en partie de la comparaison.

2. Le procédé selon la Revendication 1, comprenant en outre la mesure de la qualité en liaison descendante ou des une ou plusieurs valeurs d'historique de qualité en liaison descendante du noeud cible au moyen d'un module d'écoute de réseau.

3. Le procédé selon la Revendication 1, comprenant en outre la réception de la qualité en liaison descendante ou des une ou plusieurs valeurs d'historique de qualité en liaison descendante du noeud cible à partir d'un ou de plusieurs dispositifs.

4. Le procédé selon la Revendication 1, où la qualité en liaison descendante et les une ou plusieurs valeurs d'historique de qualité en liaison descendante correspondent à une mesure d'énergie de niveau puce sur brouillage d'un canal pilote du noeud cible.

5. Le procédé selon la Revendication 1, comprenant en outre l'obtention d'un indicateur de puissance de signal reçue en liaison montante, RSSI, au niveau du noeud cible, où l'obtention des informations de charge est basée sur le RSSI en liaison montante.

6. Le procédé selon la Revendication 1, comprenant en outre le calcul du débit au niveau d'un noeud femto de desserte en fonction de paramètres spécifiques au noeud femto de desserte ou de paramètres spécifiques au dispositif.

7. Le procédé selon la Revendication 6, où le seuil est le débit au niveau du noeud femto de desserte.

8. Le procédé selon la Revendication 1, où la détermination s'il convient de transférer le dispositif comprend la détermination s'il convient de modifier un ou plusieurs paramètres de communication au niveau d'un noeud femto de desserte de façon à provoquer un transfert du dispositif.

9. Le procédé selon la Revendication 8, où les un ou plusieurs paramètres comprennent une puissance de transmission, une fréquence opérationnelle, une transmission de balise ou un état de communication d'un ou de plusieurs dispositifs communiquant avec le noeud femto de desserte.

10. Le procédé selon la Revendication 1, comprenant en outre l'obtention d'un emplacement par rapport au noeud cible, où le débit attendu est en outre estimé en fonction de l'emplacement par rapport au noeud cible.

11. Le procédé selon la Revendication 10, où l'emplacement par rapport au noeud cible comprend un affaiblissement sur le trajet par rapport au noeud cible.

12. Un appareil (600) de détermination s'il convient de délester un dispositif d'un noeud femto, comprenant :
un moyen agencé de façon à exécuter les opérations selon l'une quelconque des Revendications 1 à 11.

13. Un produit de programme informatique destiné à la détermination s'il convient de délester un dispositif d'un noeud femto, comprenant :
un support lisible par ordinateur (606) contenant du code agencé de façon à exécuter les opérations selon l'une quelconque des Revendications 1 à 11.
